# FASCICULE DE BREVET EUROPEEN

(11) **EP 1 017 937 B1**
(45) Date de publication et mention de la délivrance du brevet: **25.06.2003**
(21) Numéro de dépôt: 98945343.6
(22) Date de dépôt: 22.09.1998
(51) Int. Cl.: F02M 37/22, B01D 35/027, B01D 35/147

(54) **DISPOSITIF PERFECTIONNE DE POMPAGE POUR RESERVOIR DE GASOIL SUR VEHICULE AUTOMOBILE**
PUMPVORRICHTUNG FÜR DIESELKRAFTSTOFF EINES KRAFTFAHRZEUGES
IMPROVED PUMPING DEVICE FOR A MOTOR VEHICLE GASOIL TANK

(30) Priorité: 25.09.1997 FR 9711950
(43) Date de publication de la demande: 12.07.2000
(73) Titulaire: MARWAL SYSTEMS, 51000 Chalons en Champagne (FR)
(72) Inventeur: FLAMBERT, Will, F-51000 Chalons en Champagne (FR); FILJAK, Jean, F-93800 Epinay sur Seine (FR)
(74) Mandataire: Texier, Christian
(86) Numéro de dépôt international: FR9802019
(87) Numéro de publication internationale: WO99015777

(56) Documents cités:
- EP-A- 0 578 484
- EP-A- 0 661 440
- GB-A- 2 253 160
- US-A- 1 568 796
- US-A- 3 773 144
- US-A- 4 129 503
- US-A- 4 922 959
- COMBEST: "utomotive fuel filtration trends" AUTOMOTIVE ENGINEERING, vol. 99, no. 9, 1 septembre 1991, pages 23-27, XP000242255 WARRENDALE US

## Description

La présente invention concerne le domaine des dispositifs de pompage pour carburant dans un réservoir de véhicule automobile.

Plus précisément encore la présente invention conceme le domaine des dispositifs de pompage pour gasoil ou "gazole".

On a déjà proposé de nombreux dispositifs de pompage à cet effet.

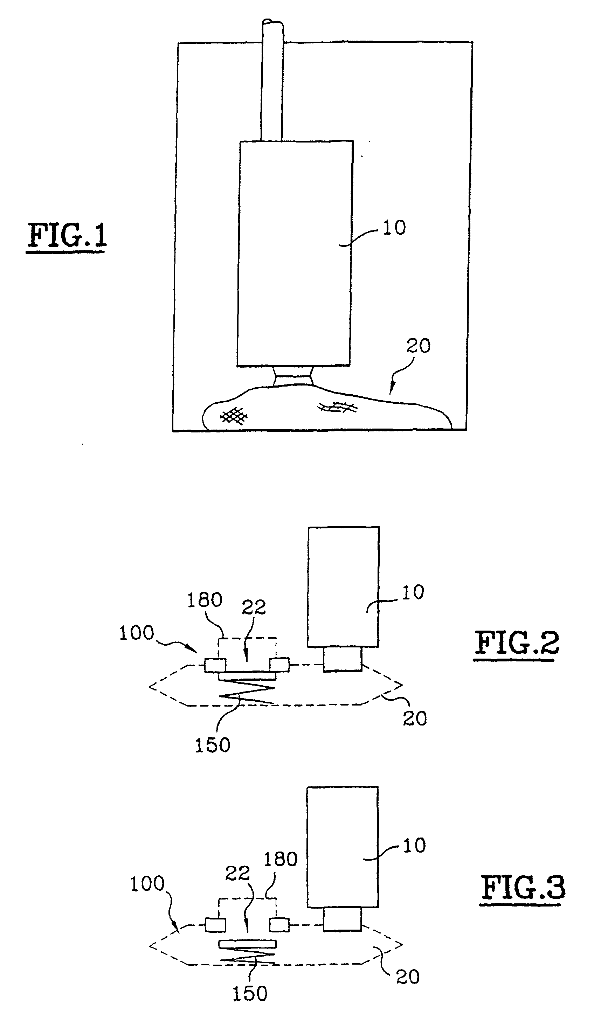

La plupart des dispositifs de pompage ainsi proposés comprennent, comme schématisé sur la figure 1 annexée, une pompe électrique 10 dont l'entrée est munie d'un filtre ou "crépine" 20. Le filtre 20 a pour fonction de protéger la pompe 10 d'une contamination susceptible de la bloquer ou de provoquer d'autres dommages. De manière typique, mais non limitative, le filtre 20 à une dimension de maille de l'ordre de 70µm. L'entrée de la pompe 10 et la crépine peuvent être situées directement dans le réservoir de carburant principal, à proximité du fond de celui-ci, ou dans une réserve placée elle-même à proximité du fond du réservoir principal et alimentée par exemple par un étage de sortie de la pompe ou par le retour de carburant non utilisé par le moteur.

On sait que en dessous d'une certaine température le gasoil a tendance à produire des particules de paraffine.

Ainsi, par temps froid, au moins au démarrage, le gasoil peut colmater le filtre 20 par paraffinage, interdisant l'alimentation de la pompe 10 et par conséquent paralysant le véhicule.

Pour essayer d'éliminer cet inconvénient majeur il a été proposé d'augmenter les mailles du filtre 20, pour limiter les risques de colmatage, par exemple en utilisant un filtre 20 ayant des mailles de dimension moyenne de l'ordre de 200µm. Néanmoins cette proposition ne donne pas toujours satisfaction, la pompe 10 n'étant pas complètement protégée avec un tel filtre à grosses mailles.

Ainsi de nos jours la majorité des systèmes d'alimentation de carburant utilisant du gasoil sont équipés d'un moyen apte à réchauffer le gasoil pour éviter de colmater le filtre fin protégeant la pompe haute pression.

Cependant la mise en pratique de ce concept pose des difficultés. Celles-ci sont dues notamment au fait que la composition des gasoils proposés aux utilisateurs peut varier d'un foumisseur à l'autre et surtout d'un pays à l'autre, les exigences en matière d'additifs et/ou de raffinement n'ayant pas encore fait l'objet d'une norme internationale.

De ce fait la température de consigne à laquelle il est souhaitable de mettre en service le moyen de chauffage précité peut dépendre de la composition du gasoil contenu dans le réservoir, plus fréquemment du pays dans lequel le réservoir a été rempli. Cette température est par exemple typiquement de l'ordre de -30 à -40°C en Suède et de l'ordre de 0°C en Afrique.

On a certes déjà tenté de résoudre ce problème en proposant un thermostat réglable pour déclencher le moyen de chauffage.

Cependant cette solution ne donne pas totalement satisfaction. En effet d'une part le réglage d'un tel thermostat s'avère difficile à opérer. D'autre part et surtout, cette solution demande en théorie que le thermostat fasse l'objet d'un nouveau réglage à chaque changement de composition du gasoil introduit dans le réservoir.

En outre de tels moyens de chauffage consomment une puissance électrique non négligeable s'ils sont alimentés en permanence indépendamment de la température.

Le document EP-A-661440 décrit un dispositif de pompage de carburant comprenant deux filtres associés à une entrée de pompe. Le premier filtre formant crépine est placé dans une réservoir principal. Le second filtre est placé dans un bol de réserve. Les sorties des deux filtres sont reliées à une chambre commune d'aspiration par l'intermédiaire de conduits. Par ailleurs, le second filtre est équipé d'un clapet constitué d'un siège associé à un obturateur. En cas de colmatage des deux filtres, la dépression résultante entraîne l'ouverture du clapet de sorte que la pompe aspire directement dans le bol.

Le document COMBEST "Automotive fuel filtration trends" Automotive engineering vol. 99, n° 9, Septembre 1991, décrit diverses structures de filtre pour carburant.

Les documents US-A-3773144, US-A-4129503 et US-A-1568796 décrivent des systèmes d'aspiration pour réservoir comprenant un filtre équipé d'un clapet adapté pour être ouvert en cas de colmatage du filtre.

La présente invention a maintenant pour but de proposer de nouveaux moyen de pompage de gasoil permettant d'éliminer les inconvénients précités.

Ce but est atteint dans le cadre de la présente invention grâce à un dispositif de pompage pour gasoil comprenant une pompe, une crépine de filtrage placée sur l'entrée de la pompe, et un clapet disposé dans un passage formé sur la crépine pour couvrir ce passage en fonctionnement normal, le clapet comprenant une cage rigide pourvue d'un siège de clapet et un obturateur coopérant avec le siège de manière à ce que le clapet puisse s'ouvrir automatiquement lorsque la différence de pression entre l'extérieur de la crépine et l'intérieur de celle-ci dépasse un seuil en raison d'un colmatage de la crépine, caractérisé par le fait que le siège du clapet est anguleux et fait saillie sur l'intérieur de la cage de clapet.

Comme on l'expliquera par la suite, le clapet est formé de préférence d'un volet étanche au carburant. Ainsi il obture le passage formé dans la crépine, en position de fermeture. Cependant en variante, le clapet peut être formé au moins en partie d'un élément de filtre possédant par exemple une dimension de maille égale à celle de la crépine.

De préférence la crépine possède des mailles de l'ordre de 70µm.

Par ailleurs de préférence le clapet est protégé par un filtre auxiliaire de plus grosses mailles, par exemple de l'ordre de 200µm à 300µm. Cependant en variante ce filtre auxiliaire peut être placé en entrée de la pompe et non pas en amont du clapet.

La présente invention concerne également les réservoirs de carburant ainsi équipés.

D'autres caractéristiques, buts et avantages de la présente invention apparaitront à la lecture de la description détaillée qui va suivre, et en regard des dessins annexés, donnés à titre d'exemple non limitatif, et sur lesquels
- la figure 1 précédemment décrite représente une vue schématique d'un ensemble de pompage classique, conforme à l'état de la technique,
- la figure 2 représente une vue schématique d'un système de pompage conforme à la présente invention, en fonctionnement normal non colmaté,
- la figure 3 représente une vue schématique similaire du même système en état colmaté,
- la figure 4 illustre une vue de dessus d'un clapet conforme à la présente invention,
- la figure 5 représente une première vue en coupe verticale, selon le plan de coupe référencé V-V sur la figure 4, de ce clapet,
- la figure 6 représente une seconde vue en coupe verticale, selon le plan de coupe référencé VI-VI sur la figure 4, du même clapet,
- la figure 7 représente une vue en coupe verticale d'un ensemble de pompage conforme à la présente invention, et
- la figure 8 représente une vue en coupe verticale du clapet, similaire à la figure 5, en position inclinée de l'obturateur du clapet.

La structure générale de l'ensemble de pompage conforme à la présente invention, notamment la structure de réservoir, réserve éventuelle, pompe et crépine, est classique en soi et ne sera donc pas décrite dans le détail par la suite.

On s'attachera donc par la suite uniquement à décrire les caractéristiques spécifiques à l'invention.

On aperçoit sur les figures 2 et 3 annexées, un ensemble de pompage comprenant une pompe électrique 10 associée à une crépine 20 formant filtre sur l'entrée de la pompe 10.

La crépine 20 est formée d'une poche reliée par une ouverture avec l'entrée de la pompe 10.

La crépine 20 présente typiquement une dimension de maille de l'ordre de 70µm.

Par ailleurs, comme indiqué précédemment, dans le cadre de la présente invention, la crépine 20 possède un passage 22 susceptible d'établir une liaison fluidique entre son volume interne et l'extérieur, c'est à dire la chambre interne du réservoir qui loge un tel ensemble de pompage. Ce passage 22 est formé dans la paroi supérieure de la crépine 20 pour éviter une pollution par les impuretés accumulées dans le fond du réservoir.

Cependant ce passage 22 est équipé d'un clapet 100 sollicité par un ressort 150 vers une position de fermeture pour couvrir le passage 22, comme illustré sur la figure 2.

Selon la représentation donnée sur les figures annexées, un filtre auxiliaire 180 est placé en amont du clapet, c'est à dire sur l'extérieur de celui-ci. Le filtre auxiliaire 180 possède des dimensions de maille supérieure à la crépine. Typiquement les mailles du filtre auxiliaire 180 sont de l'ordre de 200µm à 300µm.

En cas de colmatage par paraffinage ou par pollution, la dépression créée à l'intérieur de la crépine 20 par l'aspiration de la pompe 10 provoque l'ouverture du clapet 100 et autorise ainsi l'alimentation de la pompe 10, comme illustré sur la figure 3.

Cependant l'ouverture du clapet est limitée dans le temps. En effet ce clapet 100 est ramené automatiquement en position fermée par le ressort 150, dès que le colmatage de la crépine 20 est supprimé grâce au circuit de carburant réchauffé par le moteur retourné vers le réservoir.

Ainsi les risques de pollution ou de détérioration de la pompe 10, pendant la phase d'ouverture du clapet 100, sont limités. Par ailleurs le filtre auxiliaire 180 limite également la taille des particules susceptibles de pénétrer dans la crépine 20 pendant la phase d'ouverture du clapet 100.

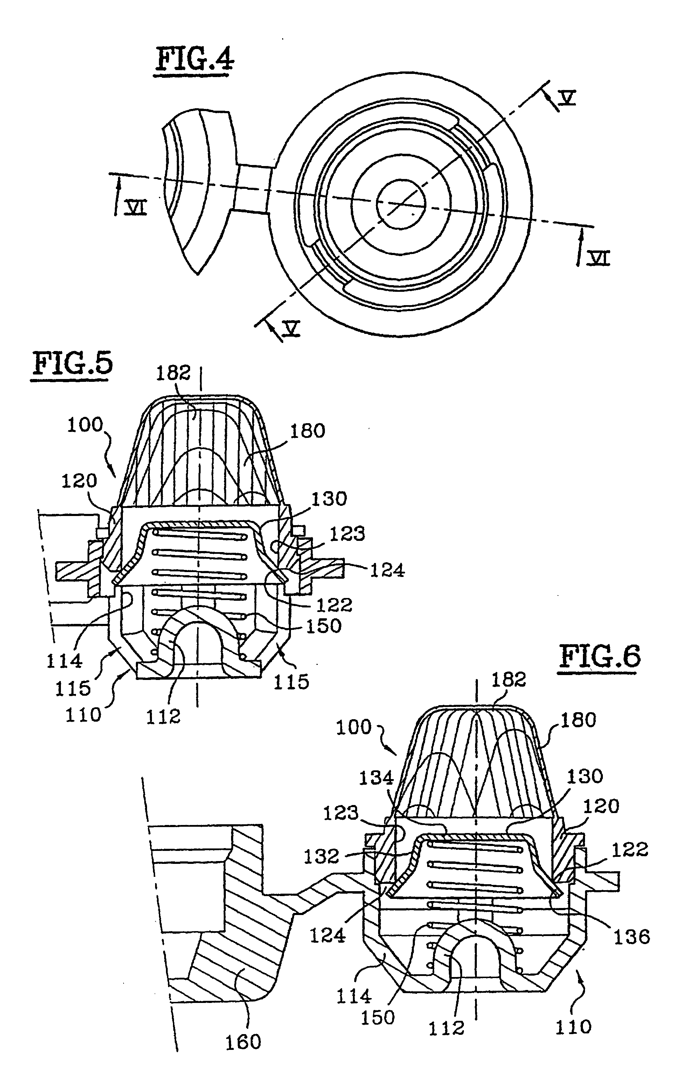

On va maintenant préciser la structure du clapet correspondant au mode de réalisation préférentiel illustré sur les figures 4 à 8 annexées.

Selon ce mode de réalisation le clapet 100 comprend essentiellement une cage rigide 110, un obturateur 130 et un ressort 150.

La cage 110 est formée d'un corps centré autour d'un axe vertical.

La cage 110 est conçue pour être placée dans la crépine 20. Elle possède une base inférieure 112 en forme de calotte centrale globalement hémisphérique, convexe vers le haut. Cette calotte 112 repose de préférence contre la toile constituant la partie inférieure de la crépine 20. La calotte 112 est surmontée d'une jupe 114 verticale. Celle-ci est évidée dans sa périphérie sous forme d'une pluralité d'ouvertures 115 visibles sur la figure 5, pour permettre une communication entre l'intérieur de la cage et l'intérieur de la crépine 20.

La cage 110 définit à sa partie supérieure un siège 122 pour l'obturateur 130.

Plus précisément le siège 122 précité est de préférence formé par un anneau 120 rapporté en partie supérieure de la cage 110.

Par ailleurs cet anneau 120 définissant le siège 122 est anguleux, et de préférence circulaire, en saillie sur l'intérieur de la cage 110.

Plus précisément encore ce siège 122 est de préférence délimité d'une part par une paroi 123 cylindrique verticale et d'autre part par une paroi 124 plane en couronne perpendiculaire à la surface 123 précitée. Le siège 122 est délimité à l'intersection entre les deux surfaces 123 et 124.

L'obturateur 130 est formé d'une coupelle à concavité dirigée vers le bas. Cette coupelle comporte un chapeau supérieur défini par une surface cylindrique 132 fermée à sa partie supérieure par une cloison transversale 134 et prolongée à sa base par une jupe tronconique 136 évasée en éloignement de la cloison 134.

Comme indiqué précédemment, la cloison 134 de l'obturateur est de préférence pleine et étanche au carburant. Cependant en variante elle peut être formée en partie d'un élément de filtre possédant des mailles de mêmes dimensions que la crépine.

Le rayon de l'arête 122 formant siège est compris entre le plus petit et le plus grand rayon de la jupe tronconique 136. Ainsi la coupelle 130 repose sur le siège 122 par l'intermédiaire de sa jupe tronconique 136.

L'obturateur 130 est sollicité dans cette position par le ressort 150.

Selon le mode de réalisation illustré sur les figures annexées, le ressort 150 est un ressort spiral intercalé entre la base 112 et la cloison supérieure 134 de la coupelle 130.

Cependant un tel ressort spiral 150 pourra être remplacé par tous moyens équivalents.

Le filtre auxiliaire 180 surmonte l'anneau 120 formant le siège 122. Le cas échéant le filtre auxiliaire 180 peut faire partie intégrante de cet anneau 120 ou être fixé sur celui-ci par tous moyens appropriés.

Le filtre auxiliaire 180 a une forme générale tronconique effilée vers le haut et obturé en partie supérieure par une paroi incurvée 182.

La cage 110 est de préférence solidaire d'une embase 160 adaptée pour assurer une liaison étanche avec l'entrée de la pompe 10. La structure de cette embase 160 qui peut faire l'objet de nombreux modes de réalisation en fonction de la configuration de l'entrée de pompe 10 ne sera pas décrite plus en détail par la suite.

La liaison entre le bord de la cage 110 et la toile filtrante formant crépine 20 peut être assurée par tous moyens appropriés, par exemple par collage ou soudure.

On notera que la réalisation du siège 122 sous forme d'un bord cylindrique en saillie à l'intérieur de la cage 110 permet de garantir une refermeture correcte du clapet, même si des particules ont pénétré dans la cage au cours d'une phase d'ouverture du clapet 100.

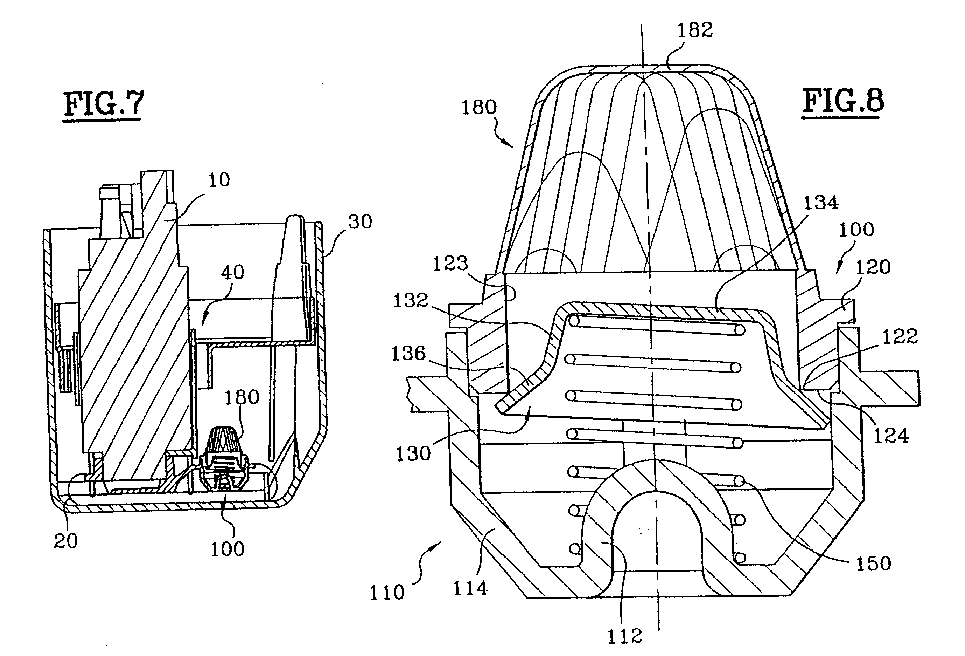

Par ailleurs cette disposition permet de garantir une fermeture satisfaisante du clapet 100, y compris en cas de défaut de coaxialité entre le siège 122 et l'obturateur 130. On a ainsi illustré le clapet 100 sur la figure 8 dans une position inclinée de l'obturateur 130.

Sur la figure 7 on a illustré la pompe 10 supportée dans un bol de réserve 30, par l'intermédiaire d'un moyen amortisseur 40.

On notera que la cage 110 peut servir d'entretoise entre la toile supérieure et la toile inférieure composant la crépine 20.

Bien entendu la présente invention n'est pas limitée au mode de réalisation qui vient d'être décrit, mais s'étend à toute variante conforme à la définition donnée par les revendications attenantes.

Ainsi par exemple en variante, le filtre auxiliaire 180 placé en amont du clapet 100 selon le mode de réalisation illustré sur les figures 2 à 8, pourrait être placé en entrée de la pompe 10, à l'intérieur de la crépine 20. Cette disposition permet de bénéficier de la température de fonctionnement de la pompe 10 et de limiter ainsi les risques de colmatage du filtre auxiliaire 180 lui même.

## Revendications

1. Dispositif de pompage pour réservoir de gasoil sur véhicule automobile comprenant une pompe (10), une crépine de filtrage (20) placée sur l'entrée de la pompe (10), et un clapet (100) disposé dans un passage (22) formé sur la crépine (20) pour couvrir ce passage (22) en fonctionnement normal, le clapet (100) comprenant une cage rigide (110) pourvue d'un siège (122) de clapet et un obturateur (130) coopérant avec le siège (122) de manière à ce que le clapet (100) puisse s'ouvrir automatiquement lorsque la différence de pression entre l'extérieur de la crépine (20) et l'intérieur de celle-ci dépasse un seuil en raison d'un colmatage de la crépine (20), **caractérisé par le fait que** le siège (122) du clapet est anguleux et fait saillie sur l'intérieur de la cage (110) de clapet.

2. Dispositif selon la revendication 1, **caractérisé par le fait que** la crépine (20) possède des mailles de l'ordre de 70µm.

3. Dispositif selon l'une des revendications 1 ou 2, **caractérisé par le fait que** le clapet (100) est protégé par un filtre auxiliaire (180) de plus grosses mailles que la crépine (20), par exemple de l'ordre de 200µm à 300µm.

4. Dispositif selon l'une des revendications 1 ou 2, **caractérisé par le fait qu'**un filtre auxiliaire (180) de plus grosses mailles que la crépine (20), par exemple de l'ordre de 200µm à 300µm, est placé en entrée de la pompe (10).

5. Dispositif selon l'une des revendications 1 à 4, **caractérisé par le fait que** la crépine (20) est formée d'une poche reliée par une ouverture avec l'entrée de la pompe (10).

6. Dispositif selon l'une des revendications 1 à 5, **caractérisé par le fait que** le passage (22) est formé dans la paroi supérieure de la crépine (20).

7. Dispositif selon l'une des revendications 1 à 6, **caractérisé par le fait que** la cage (110) est formée d'un corps centré autour d'un axe vertical, conçu pour être placée dans la crépine (20), qui possède une base inférieure (112) en forme de calotte centrale globalement hémisphérique, convexe vers le haut surmontée d'une jupe (114) verticale évidée dans sa périphérie sous forme d'une pluralité d'ouvertures (115) pour permettre une communication entre l'intérieur de la cage et l'intérieur de la crépine (20).

8. Dispositif selon la revendication 7, **caractérisé par le fait que** la cage (110) définit le siège (122) pour l'obturateur (130) de clapet à sa partie supérieure.

9. Dispositif selon la revendication 8, **caractérisé par le fait que** le siège (122) est formé par un anneau (120) rapporté en partie supérieure de la cage (110).

10. Dispositif selon l'une des revendications 1 à 9, **caractérisé par le fait que** le siège (122) est délimité d'une part par une paroi (123) cylindrique verticale et d'autre part par une paroi (124) plane en couronne perpendiculaire à la surface (123) précitée.

11. Dispositif selon l'une des revendications 1 à 10, **caractérisé par le fait que** l'obturateur (130) du clapet est formé d'une coupelle à concavité dirigée vers le bas.

12. Dispositif selon la revendication 11, **caractérisé par le fait que** la coupelle (130) comporte un chapeau supérieur défini par une surface cylindrique (132) fermée à sa partie supérieure par une cloison transversale (134) et prolongée à sa base par une jupe tronconique (136) évasée en éloignement de la cloison (134).

13. Dispositif selon la revendication 12, **caractérisé par le fait que** le rayon de l'arête (122) formant siège est compris entre le plus petit et le plus grand rayon de la jupe tronconique (136).

14. Dispositif selon l'une des revendications 1 à 13 prise en combinaison avec la revendication 7, **caractérisé par le fait que** la cage (110) du clapet sert d'entretoise entre la toile supérieure et la toile inférieure composant la crépine (20).

15. Dispositif selon l'une des revendications 1 à 14, **caractérisé par le fait que** le clapet (100) est formé d'un volet étanche au gasoil.

16. Dispositif selon l'une des revendications 1 à 14, **caractérisé par le fait que** le clapet (100) est formé en partie d'un élément de filtre.

17. Réservoir de gasoil pour véhicule automobile, **caractérisé par le fait qu'**il comporte un dispositif de pompage conforme à l'une des revendications 1 à 16.

## Patentansprüche

1. Pumpvorrichtung für einen Dieselöl-Vorratsbehälter eines Kraftfahrzeuges, mit einer Pumpe (10), einem Filtrierungs-Pumpenkorb (20), der auf dem Einlaß der Pumpe (10) sitzt, und einem Ventil (100), das in einem Durchlaß (22) angeordnet ist, der auf dem Pumpenkorb (20) ausgebildet ist, um diesen Durchlaß (22) im Normalbetrieb abzuschließen, wobei das Ventil (100) einen starren Käfig (110), der mit einem Ventilsitz (122) versehen ist, und einen Verschlußkörper (130) aufweist, der mit dem Sitz (122) derart zusammenwirkt, daß das Ventil (100) sich automatisch öffnen kann, wenn die Druckdifferenz zwischen der Außenseite des Pumpenkorbes (20) und deren Innenseite aufgrund eines Zusetzens des Pumpenkorbes (20) eine Schwelle überschreitet, **dadurch gekennzeichnet, daß** der Sitz (122) des Ventils scharfkantig ist und auf der Innenseite des Ventilkäfigs (110) vorspringt.

2. Vorrichtung nach Anspruch 1, **dadurch gekennzeichnet, daß** der Pumpenkorb (20) Maschen in der Größenordnung von 70 µm besitzt.

3. Vorrichtung nach einem der Ansprüche 1 oder 2, **dadurch gekennzeichnet, daß** das Ventil (100) durch ein Hilfsfilter (180) mit größeren Maschen als der Pumpenkorb (20) geschützt ist, zum Beispiel in der Größenordnung von 200 µm bis 300 µm.

4. Vorrichtung nach einem der Ansprüche 1 oder 2, **dadurch gekennzeichnet, daß** ein Hilfsfilter (180) mit größeren Maschen als der Pumpenkorb (20), zum Beispiel in der Größenordnung von 200 µm bis 300 µm, am Eintritt der Pumpe (10) angeordnet ist.

5. Vorrichtung nach einem der Ansprüche 1 bis 4, **dadurch gekennzeichnet, daß** der Pumpenkorb (20) aus einer Trommel gebildet ist, die durch eine Öffnung mit dem Eintritt der Pumpe (10) verbunden ist.

6. Vorrichtung nach einem der Ansprüche 1 bis 5, **dadurch gekennzeichnet, daß** der Durchlaß (22) in einer oberen Wand des Pumpenkorbes (20) ausgebildet ist.

7. Vorrichtung nach einem der Ansprüche 1 bis 6, **dadurch gekennzeichnet, daß** der Käfig (110) aus einem Körper gebildet ist, der auf eine vertikale Achse zentriert ist, und dazu konzipiert ist, um im Pumpenkorb (20) angeordnet zu werden, wobei der Käfig eine untere Basis (112) in Form einer insgesamt halbkugeligen Kalotte besitzt, die nach oben konvex ist und über der ein vertikaler Kragen (114) sitzt, der in seinem Umfang in Form einer Vielzahl von Öffnungen (115) ausgespart ist, um eine Verbindung zwischen dem Inneren des Käfigs und dem Inneren des Pumpenkorbes (20) zuzulassen.

8. Vorrichtung nach Anspruch 7, **dadurch gekennzeichnet, daß** der Käfig (110) den Sitz (122) für den Verschlußkörper (130) des Ventils an seinem oberen Teil festlegt.

9. Vorrichtung nach Anspruch 8, **dadurch gekennzeichnet, daß** der Sitz (122) die Form eines Ringes (120) hat, der am oberen Teil des Käfigs (110) angesetzt ist.

10. Vorrichtung nach einem der Ansprüche 1 bis 9, **dadurch gekennzeichnet, daß** der Sitz (122) einerseits durch eine zylindrische, vertikale Wand (123) und andererseits durch eine kranzförmige, ebene Wand (124) begrenzt ist, die senkrecht zu der vorgenannten Oberfläche (123) steht.

11. Vorrichtung nach einem der Ansprüche 1 bis 10, **dadurch gekennzeichnet, daß** der Verschlußkörper (130) des Ventils aus einem Napf mit nach unten gerichteter Höhlung gebildet ist.

12. Vorrichtung nach Anspruch 11, **dadurch gekennzeichnet, daß** der Napf (130) eine obere Kappe aufweist, die durch eine zylindrische Oberfläche (132) abgegrenzt ist, die an ihrem oberen Teil durch eine querverlaufende Trennwand (134) verschlossen ist, und an ihrer Basis durch einen kegelstumpfförmigen Kragen (136) verlängert ist, der mit zunehmender Entfernung von der Trennwand (134) ausgeweitet ist.

13. Vorrichtung nach Anspruch 12, **dadurch gekennzeichnet, daß** der Radius der Kante (122), die den Sitz bildet, zwischen dem kleinsten und dem größten Radius des kegelstumpfförmigen Kragens (136) liegt.

14. Vorrichtung nach einem der Ansprüche 1 bis 13, in Kombination mit Anspruch 7, **dadurch gekennzeichnet, daß** der Käfig (110) des Ventils als Distanzstück zwischen der oberen Wandung und der unteren Wandung dient, die den Pumpenkorb (20) zusammensetzen.

15. Vorrichtung nach einem der Ansprüche 1 bis 14, **dadurch gekennzeichnet, daß** das Ventil (100) aus einem dieselöldichten Ventilkörper gebildet ist.

16. Vorrichtung nach einem der Ansprüche 1 bis 14, **dadurch gekennzeichnet, daß** das Ventil (100) teilweise aus einem Filterelement gebildet ist.

17. Vorratsbehälter für Dieselöl für ein Kraftfahrzeug, **dadurch gekennzeichnet, daß** er eine Pumpvorrichtung nach einem der Ansprüche 1 bis 16 aufweist.

## Claims

1. A pump device for a gas oil tank of a motor vehicle, the device comprising a pump (10), a filtering strainer (20) placed at the intake of the pump (10), and a valve (100) disposed in a passage (22) formed through the strainer (20) so as to close said passage (22) in normal operation, the valve (100) comprising a rigid cage (110) provided with a valve seat (122) and a shutter member (130) cooperating with the seat (122) in such a manner that the valve can open automatically when the pressure difference between the outside of the strainer (20) and the inside thereof exceeds a threshold because of the strainer (20) becoming dogged, the device being **characterized in that** the seat (122) of the valve is angular and projects into the inside of the cage (110) of the valve.

2. A device according to claim 1, **characterized by** the fact that the strainer (20) possesses a mesh having a size of about 70 µm.

3. A device according to claim 1 or 2, **characterized by** the fact that the valve (100) is protected by an auxiliary filter (180) having a mesh larger than that of the strainer (20), e.g. having a size of about 200 µm to 300 µm.

4. A device according to claim 1 or 2, **characterized by** the fact that an auxiliary filter (180) of mesh size greater than that of the strainer (20), e.g. about 200 µm to 300 µm, is placed at the intake of the pump (10).

5. A device according to any one of claims 1 to 4, **characterized by** the fact that the strainer (20) is in the form of a bag connected via an opening to the intake of the pump (10).

6. A device according to any one of claims 1 to 5, **characterized by** the fact that the passage (22) is formed through the top wall of the strainer (20).

7. A device according to any one of claims 1 to 6, **characterized by** the fact that the cage (110) is formed by a body centered on a vertical axis, designed to be placed inside the strainer (20), possessing a bottom base (112) in the form of a generally hemispherical central cap that is upwardly convex, and surmounted by a vertical skirt (114) that flares at its periphery in the form of a plurality of openings (115) so as to allow communication between the inside of the cage and the inside of the strainer (20).

8. A device according to claim 7, **characterized by** the fact that the top portion of the cage (110) defines the seat (122) for the shutter member (130) of the valve.

9. A device according to claim 8, **characterized by** the fact that the seat (122) is formed by a ring (120) fitted to the top portion of the cage (110).

10. A device according to any one of claims 1 to 9, **characterized by** the fact that the seat (122) is defined firstly by a vertical cylindrical wall (123) and secondly by a ring-shaped plane wall (124) perpendicular to the above-specified surface (123).

11. A device according to any one of claims 1 to 10, **characterized by** the fact that the shutter member (130) of the valve is formed by a cup with its concave side directed downwards.

12. A device according to claim 11, **characterized by** the fact that the cup (130) has a top cap defined by a cylindrical surface (132) that is closed at its top end by a transverse partition (134) and that is extended at its base by a frustoconical skirt (136) that flares going away from the partition (134).

13. A device according to claim 12, **characterized by** the fact that the radius of the seat-forming edge (122) lies between the small radius and the large radius of the frustoconical skirt (136).

14. A device according to any one of claims 1 to 13 taken in combination with claim 7, **characterized by** the fact that the cage (110) of the valve serves a spacer between the top wall and the bottom wall of the strainer (20).

15. A device according to any one of claims 1 to 14, **characterized by** the fact that the valve (100) is formed by a gasoil-proof flap.

16. A device according to any one of claims 1 to 14, **characterized by** the fact that the valve (100) is formed by a portion of a filter element.

17. A gas oil tank for a motor vehicle, **characterized by** the fact that it includes a pump device according to any one of claims 1 to 16.
